# EUROPEAN PATENT APPLICATION

(11) **EP 1 562 069 A1**
(43) Date of publication of application: **10.08.2005**
(21) Application number: 05002001.5
(22) Date of filing: 01.02.2005
(51) Int. Cl.: G02F 1/1335, G02B 3/00

(54) **Trans-reflecting sheet, LCD device having the same, and method for fabricating the trans-reflecting sheet**

(30) Priority: 05.02.2004 KR 2004007631
(71) Applicant: LG ELECTRONICS INC., Seoul (KR); LG Micron Ltd., Gyeongsangbuk-do (KR)
(72) Inventor: Yee, Young-Joo, Bundang-Gu Seongnam Gyeonggi-Do (KR); Lee, Gun-Woo, Dalseo-Gu (KR); Park, Ki-Won, Dongan-Gu Anyang Gyeonggi-Do (KR); Seong, Dong-Mug, Danwon-Gu Ansan Gyeonggi-Do (KR)
(74) Representative: Rupprecht, Kay, Dipl.-Ing.

(57) **Abstract**

Disclosed is a liquid crystal display (LCD) device comprising: a liquid crystal panel (100) having a black matrix (110) of a grid type; and a trans-reflecting sheet (200) positioned between a backlight source and the liquid crystal panel, for irradiating light generated from the backlight source and reflecting a certain ratio of external light introduced through the liquid crystal panel. The trans-reflecting sheet is fabricated by a micro-machining technique and a semiconductor fabricating process thereby to increase a brightness and a contrast of a liquid crystal screen. According to this, a visibility of an image is increased, a massive fabrication is possible, and a uniform degree between fabricated products is enhanced.

## Description

### BACKGROUND OF THE INVENTION

### 1. Field of the Invention

The present invention relates to a liquid crystal display (LCD) device, and more particularly, to a trans-reflecting sheet capable of increasing a visibility of an image by increasing a brightness and a contrast of a liquid crystal screen, capable of being massively fabricated, and capable of enhancing a uniform degree between fabricated products, an LCD device having the trans-reflecting sheet, and a method for fabricating the trans-reflecting sheet.

### 2. Description of the Conventional Art

Recently, as a flat panel display, a panel display of a mobile terminal is being spotlighted and the flat panel display is mainly used in a small thin film LCD device.

However, the LCD device shields light emitted from a light source by a polarization of liquid crystal, and has more degraded function in a brightness and a sight view angle when compared with a display using a spontaneous light emitting method.

An LCD device being currently used includes a high temperature polysilicon thin film transistor, a low temperature polysilicon thin film transistor, etc. In an optical system, the LCD device is also variously implemented as a front surface projection type and a rear surface projection type.

There are several factors representing a function of the LCD device, and one of the most important factors is a brightness. According to this, various researches for improving an optical efficiency in a lamp corresponding to a light source and components such as an LCD are being performed.

When a portable information device is used outside, it is difficult to read image information displayed on a liquid crystal display due to external light source having a higher brightness than that of the LCD mounted at the portable information device.

To solve the problem, many researches are recently being performed.

### SUMMARY OF THE INVENTION

Therefore, an object of the present invention is to provide a trans-reflecting sheet capable of enhancing a brightness of a liquid crystal screen, capable of enhancing a brightness of the liquid crystal screen by using an external light source even when the external light source is excessive, and capable of increasing a visibility of an image by increasing a uniform degree of light and a light collecting function in a unit pixel of the liquid crystal screen and thus by increasing a contrast, an LCD device having the trans-reflecting sheet, and a method for fabricating the trans-reflecting sheet.

Another object of the present invention is to provide a trans-reflecting sheet capable of being massively fabricated and enhancing a uniform degree of massively fabricated products, an LCD device having the trans-reflecting sheet, and a method for fabricating the trans-reflecting sheet.

To achieve these and other advantages and in accordance with the purpose of the present invention, as embodied and broadly described herein, there is provided an LCD device comprising: a liquid crystal panel having a black matrix of a grid type; and a trans-reflecting sheet positioned between a backlight source and the liquid crystal panel, for irradiating light generated from the backlight source and reflecting a certain ratio of external light introduced through the liquid crystal panel.

To achieve these and other advantages and in accordance with the purpose of the present invention, as embodied and broadly described herein, there is also provided a trans-reflecting sheet comprising: a flat panel portion formed as a transparent body having a certain thickness and area; a microlens array portion having a plurality of microlenses extendingly protruded from one surface of the flat panel portion; and a trans-reflecting film coated on the microlens array portion as a thin metal layer and reflecting light of a certain ratio.

To achieve these and other advantages and in accordance with the purpose of the present invention, as embodied and broadly described herein, there is still also provided a method for fabricating a trans-reflecting sheet comprising: fabricating a molding having a plurality of concave portions at one surface thereof; fabricating a microlens array sheet having microlenses by using the molding; and coating a metal thin film for reflecting light of a certain ratio on the microlenses of the microlens array sheet.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
FIG. 1 is a disassembled perspective view showing one embodiment of an LCD device according to the present invention;
FIG. 2 is a perspective view showing a trans-reflecting sheet according to the present invention;
FIG. 3 is a sectional view taken along line A-A' of FIG. 2;
FIG. 4 is a sectional veiw taken along line B-B' of FIG.2 ;
FIGs. 5 and 6 are respectively a plane view and a sectional view partially showing the trans-reflecting sheet according to the present invention;
FIG. 7 is a flow chart showing a method for fabricating the trans-reflecting sheet according to the present invention;
FIGs. 8 to 12 are sectional views sequentially showing the method for fabricating the trans-reflecting sheet according to the present invention; and
FIGs. 13 and 14 are sectional views respectively showing an operation state of the LCD device according to the present invention.

### DETAILED DESCRIPTION OF THE PREFERRED EMBODIMENTS

Reference will now be made in detail to the preferred embodiments of the present invention, examples of which are illustrated in the accompanying drawings.

Hereinfater, a trans-reflecting, an LCD device having the trans-reflecting, and a method for fabricating the trans-reflecting sheet will be explained in more detail with reference to the attached drawings.

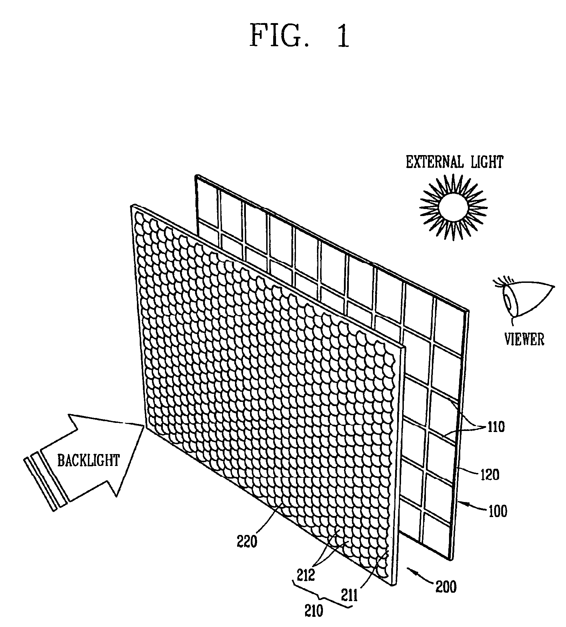

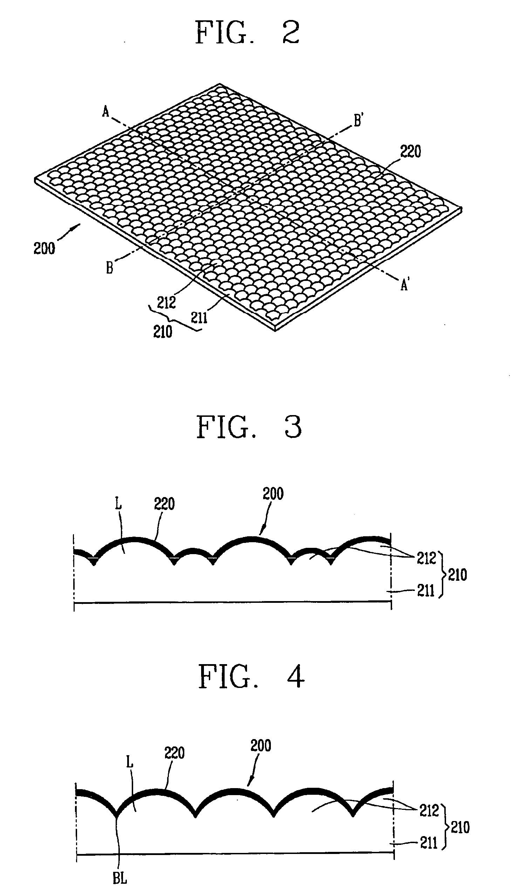

FIG. 1 is a disassembled perspective view showing one embodiment of an LCD device according to the present invention, FIG. 2 is a perspective view showing a trans-reflecting sheet according to the present invention,FIG. 3 is a sectional view taken along line A-A' of FIG. 2, and FIG. 4 is a sectional veiw taken along line B-B' of FIG.2.

As shown, the LCD device according to the present invention comprises: a liquid crystal panel 100 having a black matrix of a grid type; and a trans-reflecting sheet 200 positioned between a backlight source and the liquid crystal panel 100, for irradiating light generated from the backlight source and reflecting a certain ratio of external light introduced through the liquid crystal panel 100.

The liquid crystal panel 100 is composed of: a transparent sheet 120 formed as a transparent body having a certain thickness and area; and a black matrix 110 attached to one surface of the transparent sheet 120. The black matrix 110 is a thin film formed as a mesh type, and has a size corresponding to that of the transparent sheet 120. The black matrix 110 is attached to one surface of the transparent sheet 120.

The trans-reflecting sheet 200 is composed of: a microlens array sheet 210 having a plurality of microlenses at one surface thereof; and a trans-reflecting film 220 coated on the microlenses of the microlens array sheet 210.

The microlens array sheet 210 is composed of: a flat panel portion 211 formed as a transparent body having a certain thickness and area; a microlens array portion having a plurality of microlenses extendingly protruded from one surface of the flat panel portion 211.

The microlenses are arranged as a honeycomb shape.

The microlenses are respectively formed as a square shape, and the microlenses are arranged in a horizontal direction or a vertical direction.

It is also possible that the microlenses are formed as various shapes and are arranged in a horizontal direction or a vertical direction.

The microlenses are respectively formed as a spheric surface or an aspheric surface having a convex shape.

The microlens is a subminiature lens having a size corresponding to several micrometer to tens of micrometer.

A boundary line (BL) is formed at a position where each microlens L meets so that a full fill factor can be obtained between each microlens L.

The microlens array sheet 210 can be formed of one of silicon, glass, metal, and organic polymer.

The trans-reflecting film 220 is preferably formed of one of silver, aluminum, and chrome. A thickness of the trans-reflecting film 220 is properly adjusted in a range of several nanometer according to a required transmittance.

The trans-reflecting sheet 200 and the liquid crystal panel 100 are arranged so that a flat surface of the flat panel portion 211 of the microlens array sheet can face the black matrix 110. Also, a backlight source is located at a side where the microlenses L of the trans-reflecting sheet 200 are positioned.

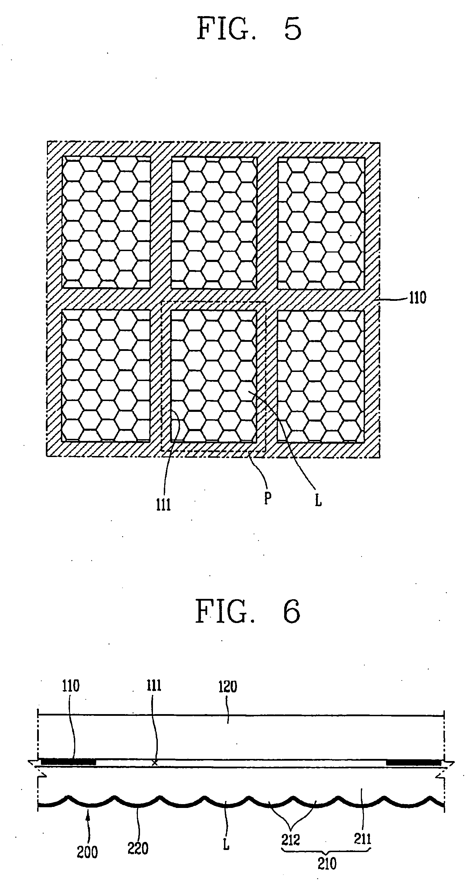

As shown in FIGs. 5 and 6, the microlenses L of the microlens array sheet 210 are formed so that a plurality of microlenses L can be formed at each unit pixel P corresponding to each unit region 111 of the black matrix 110. Also, the black matrix 110 is formed so that a plurality of microlenses L of the microlens array sheet can be formed in each unit pixel P corresponding to each unit region.

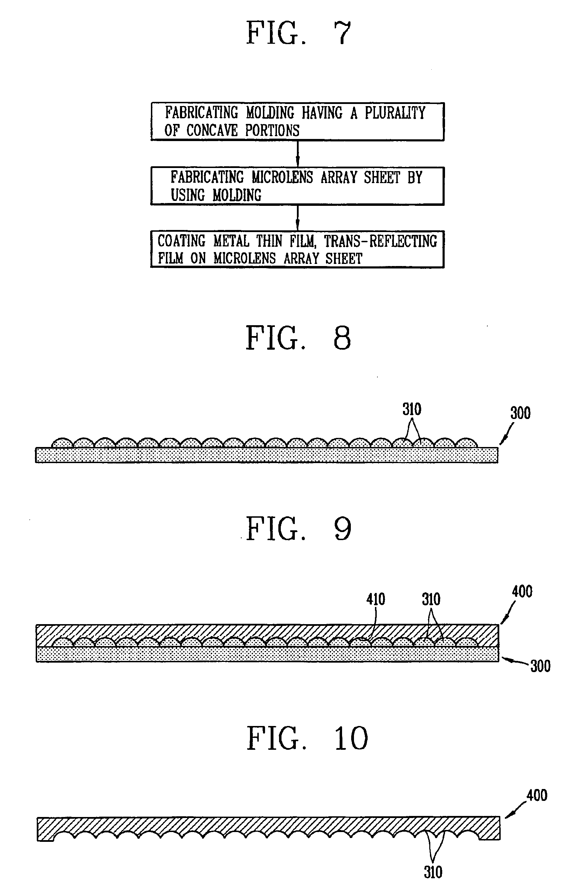

As shown in FIG. 7, a method for fabricating a trans-reflecting sheet according to one embodiment of the present invention comprises: fabricating a molding having a plurality of concave portions at one surface thereof; fabricating a microlens array sheet having microlenses by using the molding; and coating a metal thin film for reflecting light of a certain ratio on the microlenses of the microlens array sheet.

The step for fabricating a molding comprises: forming a plurality of protrusions on a substrate having a certain area by a semiconductor fabricating process; forming the protrusions into protrusions having a spheric shape or an aspheric shape by a reflow process; coating metal on the protrusions having a convex surface with a certain thickness; and detaching the coated metal from the substrate having the protrusions.

The method for fabricating the trans-reflecting sheet will be explained in more detail as follows.

FIGs. 8 to 12 are sectional views sequentially showing the method for fabricating the trans-reflecting sheet according to the present invention. As shown, photoresist, or photosensitive polymer, etc. is coated, deposited, or laminated on a front side of a flat substrate 300, thereby forming a layer of a certain thickness.

Then, a pattern having circular shapes or oval shapes at positions where each microlens is to be formed is formed on the substrate 300 by a lithography process. Then, the substrate 300 having the pattern is thermally processed for a certain time at a certain temperature, thereby reflowing the photoresist or photosensitive polymer that constitutes circular or oval protrusions formed on the substrate 300 so that the circular or oval protrusions can become a spheric shape.

Then, a conformal deposition technique is applied to the spheric protrusions 310 to fill an air gap between the spheric protrusions 310, thereby having a full fill factor.

Then, metal such as nickel, etc. is coated on the spheric protrusions 310 by an electroplating method or an electroless plating method with a certain thickness, thereby forming a coated layer 400. Next, the coated layer 400 is detached from the substrate 300 where the protrusions are formed, so that the coated layer 400 becomes a molding where a plurality of concave portions 410 are formed.

By using the molding, the microlens array sheet 210 having a plurality of microlenses at one surface thereof can be massively fabricated.

A metal thin film 220 formed of one of silver, aluminum, and chrome having a high reflectivity is formed on the microlenses of the microlens array sheet 210. The metal thin film 220 is formed by using one of a sputtering method, an evaporation method, a chemical vapor deposition method, etc., and has a thickness corresponding to several nanometer. The metal thin film 220 becomes a trans-reflecting film.

By the above processes, the trans-reflecting sheet 200 is fabricated.

Hereinafter, operations and effects of the trans-reflecting sheet, the LCD device having the trans-reflecting sheet, and the method for fabricating the trans-reflecting sheet will be explained.

First, an operation of the LCD device having the trans-reflecting sheet according to the present invention will be explained.

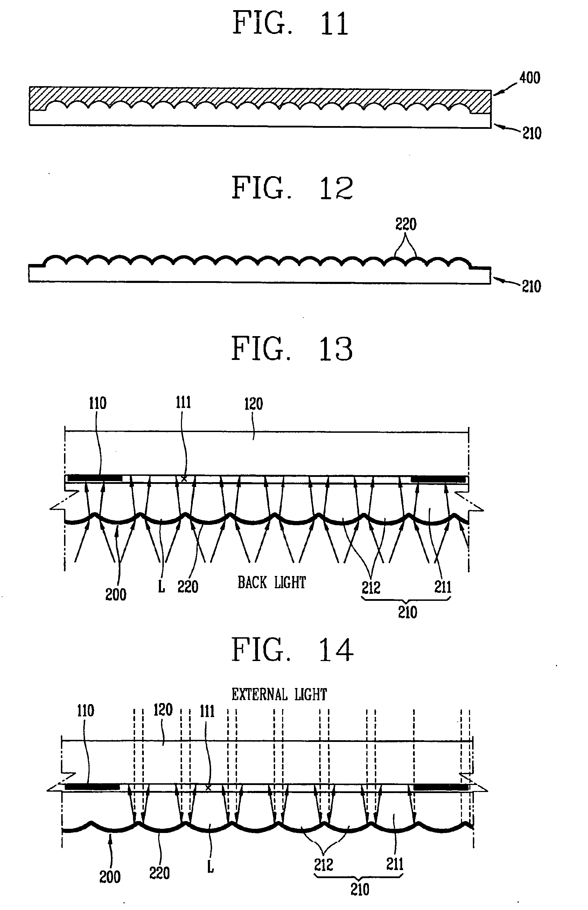

As shown in FIG. 13, when a backlight source is used, light generated from the backlight source is incident on the trans-reflecting sheet 200 through the microlens array portion of the trans-reflecting sheet 200. The light passing through the trans-reflecting film 220 is collected into each spheric or aspheric microlens L of the microlens array portion, and then is irradiated into the unit pixel P of the liquid crystal panel 100.

In case that external light having a high intensity is irradiated on the LCD device of the present invention (for example, when the LCD device of the present invention is used at a place where sunlight is intensive, external light having a high intensity is irradiated on the LCD device), as shown in FIG. 14, the external light having a high intensity is introduced into the LCD device through the liquid crystal panel 100. The external light introduced into the LCD device through the liquid crystal panel 100 is reflected by the trans-reflecting film 220 and a certain ratio of the light is again irradiated on the liquid crystal panel 100 thereby to serve as a backlight source. Since the trans-reflecting film 220 that reflects a certain ratio of external light serves as a spheric mirror, light can be more efficiently collected into an effective pixel in the liquid crystal panel 100.

When a backlight source or external light having a strong intensity is applied to the LCD device according to the present invention, light is collected into the effective pixel of the liquid crystal panel 100 thereby to increase a light collecting function. According to this, a contrast is increased and a blur phenomenon between pixels is prevented.

Also, in the LCD device of the present invention, since a plurality of microlenses L are arranged in each unit region 111 of the black matrix 110 of a mesh type, a light collecting function by each microlens L is increased and several point light sources are distributed in the unit pixel P of the liquid crystal panel 100 corresponding to each unit region 111 of the black matrix 110. According to this, a contrast in each pixel P is increased and a uniform distribution of light is obtained. In the present invention, the microlens array portion of the microlens array sheet is formed as a honeycomb shape, an oval shape, or a polygon shape, a density between each microlens L is increased. Also, since a plurality of microlenses L are arranged in each unit region 111 of the black matrix 110 corresponding to the unit pixel P of the liquid crystal panel, the trans-reflecting sheet 200 and the liquid crystal panel 100 having the black matrix 110 are easily assembled to each other. If each unit region 111 of the black matrix 110 corresponding to each unit pixel P of the liquid crystal panel 100 is formed to have the same pitch as each microlens L of the microlens array sheet, the black matrix 110 and the microlens array sheet 210 have to be precisely assembled to each other so that each unit region 111 of the black matrix 110 and each microlens L of the microlens array sheet can be located at the same position. According to this, the assembly process becomes very difficult.

In the method for fabricating a trans-reflecting sheet according to the present invention, a trans-reflecting sheet having a size corresponding to a micro unit or a nano unit is massively fabricated by using a molding. Also, a uniform degree between the trans-reflecting sheets fabricated by the molding is increased. Since the molding is fabricated by using a micro-machining technique and a semiconductor fabricating process, a small and precise shape can be obtained. According to this, a full fill factor between each microlens L is maximized thereby to increase a density between each microlens L. The trans-reflecting sheet 200 and the LCD device having the trans-reflecting sheet fabricated by the above processes have the aforementioned operation.

As aforementioned, a function for collecting light generated from the backlight is increased, a certain ratio of light projected from external light is reflected, and a uniform degree of light inside the effective pixel of the liquid crystal panel is increased to increase a brightness and a contrast. According to this, a visibility of an image is increased and thereby a reliability of a product is enhanced.

Also, since the trans-reflecting sheet is massively fabricated and the assembly process is simplified, the fabrication cost is reduced and a uniform degree between fabricated products is increased thereby to enhance a product yield.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalence of such metes and bounds are therefore intended to be embraced by the appended claims.

The claims refer to examples of preferred embodiments of the invention. However, the invention also refers to the use of any single feature and subcombination of features which are disclosed in the claims, the description and/or the drawings.

## Claims

1. A liquid crystal display (LCD) device comprising:
a liquid crystal panel having a black matrix of a grid type; and
a trans-reflecting sheet positioned between a backlight source and the liquid crystal panel, for irradiating light generated from the backlight source and reflecting a certain ratio of external light introduced through the liquid crystal panel.

2. The LCD device of claim 1, wherein the trans-reflecting sheet includes:
a microlens array sheet having a plurality of microlenses at one surface thereof; and
a trans-reflecting film coated on the microlenses of the microlens array sheet.

3. The LCD device of claim 2, wherein a plurality of the microlenses of the microlens array sheet are corresponded to each unit pixel corresponding to each unit region of the black matrix.

4. The LCD device of claim 2, wherein the microlenses are respectively arranged as a honeycomb shape.

5. The LCD device of claim 2, wherein the microlenses are respectively formed as an oval shape or a polygon shape.

6. The LCD device of claim 2, wherein the microlenses respectively have a convex spheric shape or a convex aspheric shape.

7. The LCD device of claim 2, wherein a boundary line is formed at a position where each microlens meets so that a full fill factor can be obtained between each microlens.

8. The LCD device of claim 2, wherein the trans-reflecting film is formed of one of silicon, aluminum, and chrome.

9. The LCD device of claim 2, wherein the trans-reflecting film is a spheric mirror.

10. A trans-reflecting sheet comprising:
a flat panel portion formed as a transparent body having a certain thickness and area;
a microlens array portion having a plurality of microlenses extendingly protruded from one surface of the flat panel portion; and
a trans-reflecting film coated on the microlens array portion as a metal thin film, for reflecting a certain ratio of light.

11. The trans-reflecting sheet of claim 10, wherein a boundary line is formed at a position where each microlens meets so that a full fill factor can be obtained between each microlens.

12. The trans-reflecting sheet of claim 10, wherein the trans-reflecting film is formed of one of silicon, aluminum, and chrome.

13. The trans-reflecting sheet of claim 10, wherein the trans-reflecting film is a spheric mirror.

14. A method for fabricating a trans-reflecting sheet comprising:
fabricating a molding having a plurality of concave portions at one surface thereof;
fabricating a microlens array sheet having microlenses by using the molding; and
coating a metal thin film for reflecting light of a certain ratio on the microlenses of the microlens array sheet.

15. The method of claim 14, wherein the step for fabricating a molding comprises:
forming a plurality of protrusions on a substrate having a certain area by a semiconductor fabricating process;
forming the protrusions into protrusions having a spheric shape or an aspheric shape by a reflow process;
filling a gap between each protrusion by a conformal deposition method;
coating metal on the convex protrusions with a certain thickness; and
detaching the coated metal from the substrate having the protrusions.

16. The method of claim 14, wherein the metal thin film is formed of one of silver, aluminum, and chrome by using one of a sputtering method, an evaporation method, and a chemical vapor deposition method.
